Europäisches Patentamt

European Patent Office

Office européen des brevets

(11) Veröffentlichungsnummer: **0 294 712 B1**

# EUROPÄISCHE PATENTSCHRIFT

(45) Veröffentlichungstag der Patentschrift: **29.04.92**

(21) Anmeldenummer: **88108859.5**

(22) Anmeldetag: **03.06.88**

(51) Int. Cl.5: **A01C 15/00**, A01C 7/00

(54) **Hydraulikanlage für eine landwirtschaftliche Verteilmaschine.**

(30) Priorität: **10.06.87 DE 3719269**

(43) Veröffentlichungstag der Anmeldung:
**14.12.88 Patentblatt 88/50**

(45) Bekanntmachung des Hinweises auf die
Patenterteilung:
**29.04.92 Patentblatt 92/18**

(84) Benannte Vertragsstaaten:
**BE DE FR NL**

(56) Entgegenhaltungen:
**DE-A- 2 614 959**
**DE-A- 3 310 424**
**DE-A- 3 535 871**
**GB-A- 2 133 556**
**US-A- 3 912 121**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Scheufler, Bernd, Dr.
Am Amazonenwerk 101
W-4507 Hasbergen(DE)**
Erfinder: **Averdiek-Bolwin, Hein
Am Naturpark 29
W-4504 Georgsmarienhütte(DE)**
Erfinder: **Kemper, Martin
Fontanestrasse 15
W-4506 Hagen a. T.W.(DE)**
Erfinder: **Müller, Heinrich
Schwarzriethweg 12
W-4769 Salzkotten(DE)**

(74) Vertreter: **Patentanwälte Grünecker, Kinkeldey, Stockmair & Partner et al
Maximilianstrasse 58
W-8000 München 22(DE)**

# Beschreibung

Die Erfindung betrifft eine Hydraulikanlage für eine landwirtschaftliche Verteilmaschine gemäß des Oberbegriffes des Patentanspruches 1.

Eine derartige Hydraulikanlage ist in der DE-OS 34 35 398 beschrieben. Über das regelbare Dreiwegestromregelventil ist die Drehzahl des in der Hydraulikanlage angeordneten Hydraulikmotors, der ein Dosierorgan der landwirtschaftlichen Verteilmaschine antreibt, regelbar. In welcher Weise das Dreiwegestromregelventil regelbar ist, ist in dieser Druckschrift nicht beschrieben. Des weiteren ist in dieser bekannten Hydraulikanlage ein schaltbares Wegeventil zum Ein- und Ausschalten des die Dosierorgane antreibenden Hydraulikmotors angeordnet, über welches durch eine Handbetätigung die Druckölzufuhr zu dem Hydraulikmotor schlagartig abzuschalten ist, so daß ein schlagartiges Stillsetzen der Dosierorgane von Hand möglich ist.

Von Nachteil ist nun bei dieser bekannten Hydraulikanlage, wenn sich die Fahrgeschwindigkeit der Verteilmaschine beim Ausbringen des Materials während des Ausbringvorganges ändert, daß dann pro Flächeneinheit entsprechend der Änderung der Fahrgeschwindigkeit mehr oder weniger Material ausgebracht wird. D.h. also, daß die Drehzahl des Hydraulikmotors über das Dreiwegestromregelstromregelventil nicht automatisch an die aktuelle Fahrgeschwindigkeit angeglichen wird.

Des weiteren ist durch die deutsche Offenlegungsschrift 33 10 424 eine Hydraulikanlage für eine landwirtschaftliche Verteilmaschine bekanntgeworden, die ebenfalls einen regelbaren Antrieb für den Antrieb der Dosierorgane aufweist, wobei in der Druckölleitung zu dem die Dosierorgane antreibenden Hydraulikmotor ein regelbares Dreiwegestromregelventil angeordnet ist, über welches die Drehzahl des Hydraulikmotors und somit die Drehzahl der Dosierorgane und letzendlich die Ausbringmenge von Material regelbar ist. Diesem Dreiwegestromregelventil ist ein elektrischer Stellmotor zugeordnet, welcher in einem Regelkreis angeordnet ist, dessen Führungsgröße die aktuelle Fahrgeschwindigkeit der Verteilmaschine ist. Von Nachteil ist jedoch bei dieser bekannten Hydraulikanlage, daß bei einer Unterbrechung des Arbeitsvorganges die Drehzahl des Hydraulikmotors über das Dreiwegestromregelventil bis auf 0 geregelt werden muß. Dieses dauert jedoch relativ lange. Ebenfalls dauert es relativ lange, wenn zu Beginn des Ausbringvorganges über das Dreiwegestromregelventil der Hydraulikmotor aus der Stellung 0, d.h., daß auch das Dreiwegestromregelventil aus der Stellung 0 bis auf die Sollstellung gebracht werden muß. Des weiteren ist von Nachteil, daß bei einem plötzlichen Stop des Ausbringvorganges, wenn also die aktuelle Fahrgeschwindigkeit 0 wird, in einer relativ langen Zeit das Dreiwegestromregelventil bis in die Position 0 geregelt werden muß, damit der Antrieb für den Hydraulikmotor und somit ein Stillstand der Dosierorgane erreicht wird, damit kein Material mehr ausgebracht wird. Dieses ist jedoch in der Praxis vollkommen unzulänglich. Die Stellzeiten sind einfach zu lang.

Der Erfindung liegt nun die Aufgabe zugrunde, eine Hydraulikanlage der eingangs umrissenen Art, bei der über ein schaltbares Wegeventil ein schlagartiges Ein- und Ausschalten des die Dosierorgane antreibenden Hydraulikmotors möglich ist, in einfacher Weise eine Möglichkeit aufzuzeigen, daß in einfacher Weise ohne lange Totzeit das Material gleichmäßig auch bei sich ändernden Fahrgeschwindigkeiten ausgebracht werden kann.

Diese Aufgabe wird erfindungsgemäß durch die Merkmale des Kennzeichens des Patentanspruches 1 gelöst. Infolge dieser Maßnahme wird ständig die aktuelle Fahrgeschwindigkeit ermittelt und entsprechend der aktuellen Fahrgeschwindigkeit wird das Dreiwegestromregelventil und somit die Drehzahl des Hydraulikmotors und damit auch die Ausbringmenge der aktuellen und tatsächlichen Fahrgeschwindigkeit ständig nachgeführt. Des weiteren wird bei einem Stop während des Ausbringvorganges oder bei der Unterbrechung des Ausbringvorganges am Feldende zum Wenden, wenn die Fahrgeschwindigkeit verringert wird, der durch den Vergleich der Fahrgeschwindigkeiten miteinander ermittelte Fahrgeschwindigkeitsänderungswert mit einem festgelegten Grenzwert verglichen. Wenn der Grenzwert erreicht wird, wird das Wegeventil über die Überwachungseinrichtung geschaltet, so daß dann schlagartig die Druckölzufuhr zu dem Hydraulikmotor unterbrochen und somit schlagartig der Ausbringvorgang beendet wird. Der Hydraulikmotor und die Dosierorgane werden schlagartig stillgesetzt, so daß das Ausbringorgan schlagartig unterbochen wird. Andererseits wird bei dem Anfahren und einer Geschwindigkeitsvergrößerung zum Unterbrechen des Ausbringvorganges nach dem Wenden am Feldende oder einem sonstigen Stop, wenn der Fahrgeschwindigkeitsänderungswert den Grenzwert wieder unterschreitet, über die Überwachungseinrichtung das Wegeventil entsprechend neu geschaltet, so daß die Druckölzufuhr zu dem Hydraulikmotor wieder eingeschaltet wird, so daß schlagartig wieder dem Hydraulikmotor die entsprechende Druckölmenge über das Dreiwegestromregelventil zugeführt wird, so daß schlagartig wieder die Sollausbringmenge ausgebracht wird.

In einfacher Weise ist erfindungsgemäß vorgesehen, daß ein Wegaufnehmer zur Ermittlung der Fahrgeschwindigkeit vorgesehen ist, der mehrere Impulse pro Umdrehung erzeugt, daß die Zeit zwischen den einzelnen Impulsen von der Überwachungseinrichtung erfaßt und jeweils das Verhältnis zwischen den aufeinanderfolgenden Zeiten von Impuls zu Impuls gebildet wird, und daß ein Grenzverhältnis festgelegt ist. Hierdurch wird in einfacher Weise eine sehr einfache Impulsermittlung der aktuellen Fahrgeschwindigkeit aufgezeigt. In einfacher Weise kann das Ermitteln der aktuellen Fahrgeschwindigkeit und der Fahrgeschwindigkeitsänderung zum Regeln der Ausbringmenge dadurch erreicht werden, daß bei Unterschreiten des Grenzwertes durch das Zeitverhältnis von Impuls zu Impuls und/oder des Fahrgeschwindigkeitsänderungswertes das Dreiwegestromregelventil entsprechend den Änderungen nachgestellt bzw. nachgeregelt wird.

Wenn über das von der Überwachungseinrichtung zu schaltende Wegeventil nur die Druckölzufuhr zu dem die Dosierorgane antreibenden Hydraulikmotor unterbochen werden soll, wird in einer einfachen Ausführung das Wegeventil als 3/2 Wegeventil ausgebildet.

Wenn jedoch zusätzlich von der Überwachungseinrichtung noch weitere hydraulische Elemente der Verteilmaschine geschaltet werden soll, ist erfindungsgemäß vorgesehen, daß an das Wegeventil zusätzlich zumindest ein Hydraulikzylinder angeschlossen ist, daß beim Abschalten des Hydraulikmotors über das Wegeventil der Druckölstrom dem Hydraulikzylinder zugeleitet wird. Infolge dieser Maßnahme ist es dann möglich, in Abhängigkeit von dem Unterbrechen des Druckölstromes oder des Einschalten des Druckölstromes zu dem die Dosierorgane antreibenden Hy raulikmotors, d.h. also in Abhängigkeit vom Ausbringen oder Nichtausbringen von Material weitere Elemente der Verteilmaschine zu schalten, beispielsweise Säschare bei Drillmaschine auszuheben und abzusenken oder die Verteilergestänge von Pneumatikdüngerstreuern ein- und auszuklappen.

In einer bevorzugten Ausführungsform ist dann das Wegeventil als 4/3 Wegeventil ausgebildet.

An dieser Stelle soll ausdrücklich darauf hingewiesen werden, daß mit in die Erfindung eingeschlossen werden soll, daß es sich bei den hydraulischen Wegeventilen nicht unbedingt um Wegeventile im "klassischen Sinne" handeln muß, sondern vielmehr kann jede Art von Ventilen, wie beispielsweise Sitzventile, entsprechende entriegelbare Rückschlagventile etc. verwendet und in entsprechender Weise in die Schaltung eingesetzt werden, daß sie dann die Funktion der "klassischen Wegeventile" erfüllen.

Wenn die Hydraulikanlage derart ausgebildet ist, daß noch weitere Verbraucher oder hydraulische Elemente wie zusätzliche Hydraulikzylinder, vorhanden sind, ist erfindungsgemäß vorgesehen, daß das Wegeventil in die die Hydraulikzylinder mit Durcköl beaufschlagende Stellung über einen von Hand zu betätigenden Tastschalter bringbar ist und bei Loslassen des Tastschalters in "Ölrücklaufstellung" geschaltet wird, daß die "Ein"- und "Aus"- Position des Wegeventils für den die Dosierorgane antreibenden "Ölmotor", wobei der Drückölstrom über das Dreiwegestromregelventil zum Ölmotor fließt, von der Überwachungseinrichtung geschaltet werden. Infolge der Maßnahme kann unabhängig von der Überwachungseinrichtung und dem Regelkreis mit der aktuellen Fahrgeschwindigkeit als Führungsgröße das Wegeventil geschaltet werden, und zwar in der Weise, daß die Hydraulikzylinder mit Drucköl beaufschlagt werden, so daß entsprechende Elemente der Verteilmaschine von Hand betätigt werden können.

Des weiteren ist erfindungsgemäß vorgesehen, daß an das Wegeventil zusätzlich zumindest ein Hydraulikzylinder angeschlossen ist, daß beim Abschalten des Hydraulikmotors über das Wegeventil der Druckölstrom dem Hydraulikzylinder zugeleitet wird, daß das Wegeventil in die die Hydraulikzylinder mit Durcköl beaufschlagende Stellung über einen von Hand zu betätigenden Tastschalter bringbar ist und hei Loslassen des Tastschalters in "Ölrücklaufstellung" geschaltet wird, daß die "Ein"- und "Aus"- Position des Wegeventils für den die Dosierorgane antreibenden "Ölmotor", wobei der Drückölstrom über das Regelventil zum Ölmotor fließt, ebenfalls über den Tastschalter in feste Position geschaltet wird. Infole dieser Maßnahme wird eine äußerst vorteilhafte Schaltung der Hydraulikanlage erreicht, wobei in einfachster Weise die Schaltvorgänge für das Dreiwegestromregelventil, welches die Drehzahl des Ölmotors und somit die Drehzahl der Dosierorgane und die Ausbringmenge regelt und bestimmt einerseits und eine Betätigung der Hydraulikzylinder andererseits erreicht. Es ergibt sich also eine vorteilhafte Wechselwirkung.

Eine äußerst vorteilhafte Weiterbildung der Hydraulikanlage, insbesondere die Regelung der Überwachungseinrichtung, deren Führungsgröße die aktuelle Fahrgeschwindigkeit der Verteilmaschine ist, wird erfindungsgemäß dadurch erreicht, daß beim Abschalten der Druckölzufuhr Zu dem Regelventil und/oder Hydraulikmotor gleichzeitig der Regelkreis für den Stellmotor des Regelventils und/oder des Regelventils abgeschaltet und so die letzte aktuelle Stellung des Regelventils vor dem Abschalten des Hydraulikmotors gespeichert wird und/oder beibehalten bleibt. Infolge dieser Maßnahmen wird erreicht, daß die Regeleinrichtung des Antriebsmotors die Stellung beibehält, die sie unmittelbar vor Beendigung des Ausbringvorganges gehabt hat, so daß dann bei Wiederaufnahme des Ausbringvorganges ohne eine lange Totzeit der Ausbringvorgang mit der gewünschten Einstellung fortgesetzt werden kann. Es wird also durch die erfindungegemäße Maßnahme vermieden, daß beim Unterbrechen des Ausbringvorganges, wenn die Fahrgeschwindigkeit 0 wird, ebenfalls aufgrund dessen, daß die Fahrgeschwindigkeit 0 (also Stillstand), da die Fahrgeschwindigkeit die Führungsgröße für den Regelkreis der Regeleinrichtung ist, die Regeleinrichtung ebenfalls bis zum Stillstand des Antriebsmotors heruntergeregelt und anschließend bei Beginn des Ausbringvorganges wieder hochgeregelt werden muß bis zu der gewünschten Stellung entsprechend der Sollausbringmenge. Durch die erfindungsgemäße Maßnahme entfällt also diese neue Einregelung über die lange Totzeit, da bei Abschalten des Antriebsmotors die Regelung für den Antriebsmotor unterbrochen und/oder abgeschaltet wird.

Es wird also bei dieser Ausbildung der Regelung gleichzeitig die Regelung für den Stellmotor automatisch unterbrochen bei der Unterbrechung des Ausbringvorganges, so daß das Regelventil die Einstellung beibehält und, wenn der Ausbringvorgang unterbrochen wird nicht gegen 0 geregelt wird, so daß bei Wiederaufnahme des Ausbringvorganges sofort wieder - und zwar ohne Totzeit -die Sollmenge ausgebracht werden kann.

In einfacher Weise kann hierbei der Regelkreis derart unterbrochen werden, daß bei Abschalten der Drucklzufuhr zu dem Hydraulikzylinder gleichzeitig die Stromzufuhr zu dem Stellmotor abgeschaltet wird.

Des weiteren ist erfindungsgemäß vorgesehen, daß bei Abschalten der Regelung für den Antriebsmotor die letzte aktuelle Stellung des Regelventils bzw. Stellmotors vor dem unmittelbaren Unterbrechen des Ausbringvorganges gespeichert und/oder beibehalten wird. Diese Speicherung erfolgt auch in vorteilhafter Weise in der elektronischen Schaltung, so daß bei Beginn des Ausbringvorganges ohne große Regelschwingungen die elektronische Einrichtung die Regelung des Antriebsmotors wieder vornehmen kann. Es wird also die Regelung für den Stellmotor des Regelventils "außer Funktion" gesetzt.

Weitere Einzelheiten der Erfindung sind der Beispielsbeschreibung und den Zeichnungen zu entnehmen. Hierbei zeigen

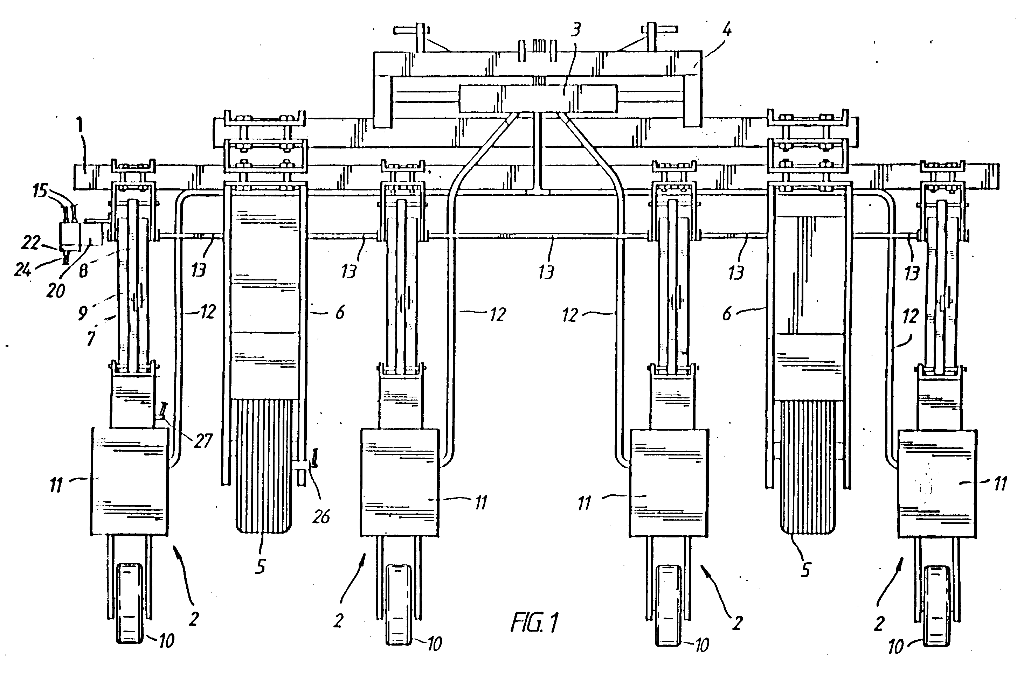

Fig. 1 eine erfindungsgemäß ausgebildete Verteilmaschine in der Draufsicht,

Fig. 2 das Blockschaltbild einer elektronisch-hydraulischen Regelung,

Fig. 3 das Blockschaltbild einer weiteren elektronisch-hydraulischen Regelung,

Fig. 4 ein Diagramm zur Erläuterung der Ermittlung des Fahrgeschwindigkeitsänderungswertes,

Fig. 5 ein weiteres Diagramm zur Erläuterung der Ermittlung des Fahrgeschwindigkeitsänderungswertes und

Fig. 6 ein weiteres Blockschaltbild einer anderen elektronisch-hydraulischen Regelung.

In der Beispielsbeschreibung ist die Verteilmaschine beispielhaft als Einzelkorndrillmaschine ausgebildet. Die Einzelkorndrillmaschine weist den Tragrahmen 1 auf, an dem die einzelnen Einzelkornsägeräte 2, das Saugluftgebläse 3 sowie der Dreipunktanbaubock 4 zum Anbau an einen Schlepperkraftheber sowie die Laufräder 5, angeordnet sind. Während des Betriebes stützt sich die Einzelkorndrillmaschine über die Laufräder 5 auf dem Boden ab.

Die Laufräder 5 sind in den Tragarmen 6 jeweils drehbar gelagert. Diese Tragarme 6 sind jeweils zwischen zwei Einzelkornsägeräte 2 an dem Tragrahmen 1 mit Schrauben festgeklemmt. Die Einzelkornsägeräte 2 sind mit der parallelogrammartigen Halterung 7 jeweils an dem Tragrahmen 1 in aufrechter Ebene bewegbar angelenkt. Die parallelogrammartige Halterung 7 weist jeweils den Oberlenker 8 und den Unterlenker 9 auf. Hinter den Einzelkornsägeräten 2 ist jeweils die höheneinstellbare Tiefenführungs - und Druckrolle 10 angeordnet, mit der die Eindringtiefe der Säschare der Einzelkorngeräte 2 in den Boden bestimmt wird.

Die Einzelkornsägeräte 2 weisen den Vorratsbehälter 11 auf, von dem aus das sich in dem Vorratsbehälter 11 befindliche Saatgut zu dem jeweiligen Vereinzelungsorgan des jeweiligen Einzelkornsägerätes 2 gelangt. Die Vereinzelung des Saatgutes durch das Vereinzelungsorgan erfolgt in bekannter und daher nicht näher erläuteter Weise. Jedes Vereinzelungsorgan wird von dem Saugluftgebläse 3 über die Schlauchleitung 12 mit Saugluft beaufschlagt. Der Antrieb der jeweils unterhalb des Vorratsbehälter 11 angeordneten Vereinzelungsorgane erfolgt von der zentralen Antriebswelle 13 über eine in dem Unterlenker 9 angeordnete Antriebsvorrichtung. Der Antrieb der zentralen Antriebswelle 13 erfolgt über den als Hydraulikmotor 20 ausgebildeten Antriebsmotor, der an die Antriebswelle 13 über eine Kupplung angeflanscht ist. Über die Hydraulikschläuche 15 läßt sich der Hydraulikmotor 20 mit dem Hydrauliksystem 21 des die Einzelkorndrillmaschine ziehenden Ackerschleppers verbinden, so daß eine Beaufschlagung des Hydraulikmotors 20 mit Hydrauliköl zum Antrieb der Vereinzelungsorgane der Einzelkornsägeräte 2 führt. Der Hydraulikmotor 20 weist den angeflanschten Steuerblock 22 auf, der ein über einen Elektromotor zu verstellendes als Regelventil 23 ausgebildetes Hydraulikmengenventil aufweist. Die Ansteuerung des Steuerblockes 22 erfolgt über welches Kabel 24, das mit dem Mikroprozessor der auf dem Ackerschlepper angeordneten elektronischen Einrichtung 25, die eine Anzeige und ein Bedienungsfeld aufweist, verbunden ist. Diese Einrichtung 25 ist als Regeleinrichtung ausgebildet.

Dieser Einrichtung 25 werden die verschiedenen Informationen wie beispielsweise die momentane Fahrgeschwindigkeit über die Sensoreinheit 26 oder die momentane Anzahl der pro Flächeneinheit ausgesäten Saatkörner mittels des Sensors 27 übermittelt. Mittels des Mikroprozessors der Einrichtung 25 erfolgt eine Regelung der gewünschten Ausbringmenge pro Flächeneinheit in Abhängigkeit von der Fahrgeschwindigkeit. Durch Veränderung der Drehzahl des die zentrale Antriebswelle 13 antreibenden Hydraulikmotor 20 über das Dreiwegestromventil 23 läßt sich der Ablegeabstand der einzelnen Saatkörner zueinander stufenlos variieren, so daß ein Verändern der pro Flächeneinheit ausgebrachten Saatkörner in besonders einfacher Weise möglich ist. Hierbei wird das als Dreiwegestromventil ausgebildete Regelventil 23 über einen Elektromotor, der über die Steuerleitung 28 von der Einrichtung 25 gesteuert wird, entsprechend nachgeregelt bzw. verstellt.

Das Einstellen der pro Flächeneinheit auszusäenden Saatkörner erfolgt mittels der elektronischen Einrichtung 25. Zu Beginn der Säarbeit braucht der Landwirt nur die von ihm gewünschte Anzahl der pro Flächeneinheit auszusäenden Saatkörner, unter Berücksichtigung der Reihenweite von beispielsweise 90.000 Saatkörner pro Hektar, über die entsprechenden Tasten des Bedienungsfeldes der Einrichtung 25 in den Mikroprozessor einzugeben, und es erfolgt automatisch eine entsprechende Einstellung des Hydraulikmotors 20 über das Regelventil 23. Dieser eingestellte Wert wird während des Sävorganges ständig mittels des Sensors 27 und der Sensorik 26 in der Einrichtung 25 überwacht und ein Nichteinhalten der gewünschten Aussaatmenge führt sofort zu einer entsprechenden Verstellung des Regelventils 23, so daß stets die pro Flächeneinheit gewünschte Anzahl der Saatkörner bzw. die Solldrehzahl des Hydraulikmotors 20 eingehalten wird. Dieser eingegebene Ausbringmengenwert läßt sich während des Sävorganges beliebig verändern, so daß eine optimale Anpassung der erforderlichen Saatgutmenge an die jeweiligen Bodenverhältnisse erfolgen kann.

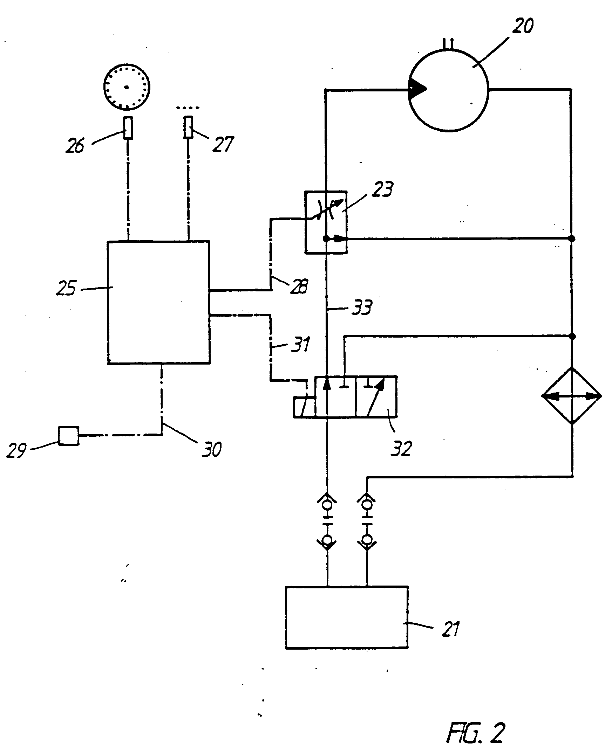

Die Funktionsweise der elektronisch-hydraulischen Regelung wird anhand des Blockschaltbildes gemäß Fig. 2 näher erläutert:

Zur automatischen Unterbrechung des Antriebes der Vereinzelungsorgane beim Unterbrechen des Ausbringvorganges, beispielsweise beim Wenden am Feldende zu dem die Maschine ausgehoben wird, wird über den in der Druckleitung des Dreipunktkrafthebers des Schleppers angeordneten Sensor 29, der über die Leitung 30 mit der Einrichtung 25 verbunden, ein Signal abgegeben, oder bei einem sonstigen Stillstand der Maschine wird über den Sensor 26 ein entsprechendes Signal an die Einrichtung 25 abgegeben. Aufgrund eines dieser beiden Signale von den Sensoren 29 und 26, wird bei einer Unterbrechung des Ausbringvorganges automatisch von die Einrichtung 25 über die Leitung 31 in dem Kabel 24 der Steuerblock 22 angesteuert und die Ölzufuhr zu dem Hydraulikmotor 20 unterbrochen, so daß die Vereinzelungsorgane nicht mehr über die zentrale Antriebswelle 13 angetrieben werden. Es wird als kein Saatgut mehr ausgebracht. Hierzu weist der Steuerblock das Wegeventil 32 (vgl. Blockschaltbild Fig. 2) auf, welches als 3/2 Wegeventil mit einer elektromagnetischen Betätigung ausgebildet ist und in der zu dem Hydraulikmotor 20 führenden Drucköllleitung 33 angeordnet ist. Dieses Wegeventil 32 bildet die schnelle und schlagartige Abschalteinrichtung für den Hydraulikmotor 20 bei Unterbrechen des Ausbringvorganges. Wenn der Ausbringvorgang fortgesetzt wird und die Maschine über den Dreipunktkraftheber des Schleppers abgesenkt ist, bzw. die Fahrgeschwindigkeitssensorik 26 Signale liefert, daß die Ausbringarbeit fortgesetzt wird, wird von der Einrichtung 25 das Wegeventil 32 über die Leitung 31 geschaltet, damit wieder Drucköl über die Drucköllleitung 33 und das Regelventil 23 dem Hydraulikmotor 20 zugeführt wird. Somit treibt der Hydraulikmotor 20 wieder die Dosierorgane an. Bei Abschalten des Hydraulikmotors 20 durch die Einrichtung 25 über das Wegeventil 32 wird die Regelung für das Dreiwegestromregelventil 23 automatisch unterbrochen. Diese Regelung wird automatisch wieder eingeschaltet, wenn durch die Einrichtung 25 über das Wegeventil 32 die Druckölzufuhr zu dem Hydraulikmotor 20 wieder eingeschaltet wird. Dieses soll im folgenden noch näher erläutert werden:

Wie bereits vor ausgeführt, wird die Drehzahl des Hydromotors 20 über das Regelventil 23 eingestellt und bestimmt, in dem von der Einrichtung 25 aufgrund der dieser Einrichtung 25 vorliegenden Informationen und Angaben von Sollmenge, Fahrgeschwindigkeit etc. über die Steuerleitung 28 das Regelventil 23 entsprechend angesteuert wird und über den dem Regelventil 23 zugeordneten elektrischen Stellmotor entsprechend eingeregelt bzw. eingestellt wird. Der Einrichtung 25 werden von der Sensorik 26, welche über bekannte und daher nicht näher dargestellte Einrichtungen die aktuelle Fahrgeschwindigkeit der Verteilmaschine ermittelt, Informationen über die aktuelle Fahrgeschwindigkeit zugeführt. Des weiteren werden der Einrichtung 25 über die Sensorik 27, die an den Dosierorganen angeordnet ist, die tatsächliche Drehzahl der Dosierorgane bzw. Signale oder Informationen über die tatsächliche Anzahl oder Menge von Material zugeleitet. Außerdem kann noch ein Sensor 29, der in der Druckölleitung des Dreipunktkrafthebers des Schleppers angeordnet ist, vorhanden sein, der über die Leitung 30 mit der Einrichtung 25 verbunden sein, der Einrichtung 25 meldet, ob die Verteilmaschine abgesenkt oder angehoben ist. Somit wird aufgrund des Signals des Sensors 25 bei angehobener Verteilmaschine der Hydraulikmotor ab- und bei abgesenkter Verteilmaschine eingeschaltet. Der Antriebsmotor 20 ist über die als Regeleinrichtung ausgebildete Einrichtung 25 und dem Dreistromregelventil 23 in einem Regelkreis angeordnet, dessen Führungsgröße die aktuelle Fahrgeschwindigkeit während des Ausbringvorganges ist. Diese Regelung ist nun derart ausgelegt, daß bei einem Abschalten des Antriebsmotors 20 durch die Einrichtung 25 über das Wegeventil 32, die Regelung über den Antriebsmotor 20 gleichzeitig unterbrochen und abgeschaltet wird. Dies bedeutet also, daß, wenn die Verteilmaschine ausgehoben bzw. angehalten wird, die Regelung des Regelventils 23 unterbrochen wird, in dem in einfachster Weise die Stromzufuhr zu dem Stellmotor des Regelventils 23 unterbrochen wird. Somit wird also bei Unterbrechung des Ausbringvorganges der Hydraulikmotor 20 nicht über das Dreiwegestromregelventil 23 bis zum Stillstand geregelt, sondern es erfolgt eine plötzliche Abschaltung der Druckölzufuhr zu dem Hydraulikmotor 20 über das Wegeventil 32 und gleichzeitig wird der Regelkreis für den Stellmotor des Regelventils 23 abgeschaltet, wenn die Druckölzufuhr zu dem Hydromotor 20 über das Wegeventil 32 unterbrochen wird. Es wird also beim Abschalten der Regelung für den Antriebsmotor 20 die letzte aktuelle Stellung des Regelventils 23 bzw. des Stellmotors vor dem unmittelbaren Unterbrechen des Ausbringvorganges beibehalten. Gleichzeitig wird diese letzte Stellung in dem Mikroprozessor der Einrichtung 25 gespeichert. Wenn nun der Ausbringvorgang wieder fortgesetzt wird, wird über die Fahrgeschwindigkeitssensorik 26 und/oder dem Sensor 29, der in der Druckölleitung des Dreipunktkrafthebers des Ackerschleppers angeordnet ist, ein entsprechendes Signal an die Einrichtung 25 übermittelt, durch welches der Einrichtung 25 mitgeteilt wird, daß der Ausbringvorgang wieder fortgesetzt wird. Aufgrund dieses Signales wird dann von der Einrichtung 25 über die Steuerleitung 31 das Wegeventil 32 derart geschaltet, daß die Öldruckzufuhr zu dem Hydraulikmotor 20 über das Regelventil 23 wieder gewährleistet ist. Gleichzeitig wird die Regelung wieder eingeschaltet, so daß das Regelventil 23 entsprechend von der Einrichtung 25 geregelt wird. Da das Regelventil 23 in der letzten vor dem Ausbringvorgang aktuellen Stellung geblieben ist, wird sofort bei Beginn des Ausbringvorganges, ohne daß das Regelventil 23 über einen langen Stellweg erst wieder auf die Sollausbringmenge eingeregelt werden muß, sofort die Sollausbringmenge ausgebracht, da der Hydraulikmotor 20 sehr schnell, praktisch schlagartig wieder die Solldrehzahl einnehmen kann.

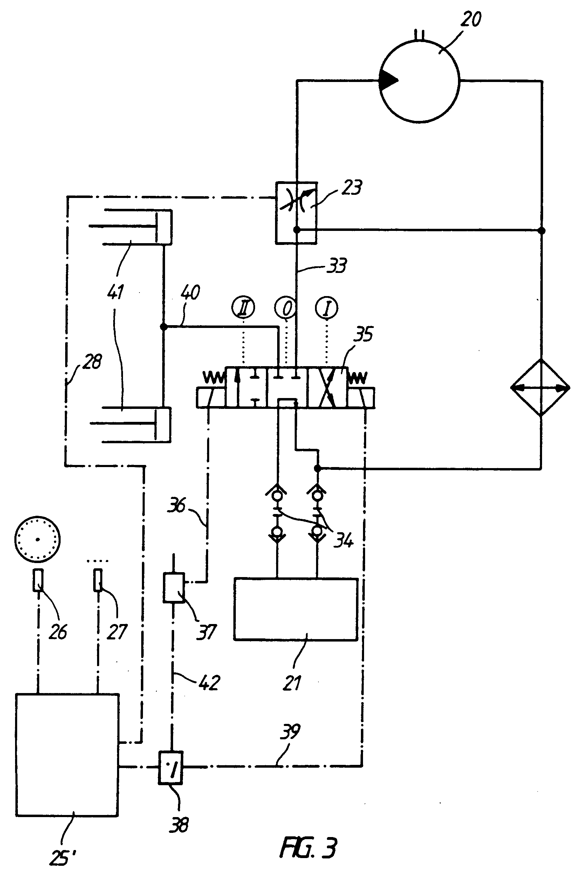

Die Hydraulikanlage für eine Verteilmaschine entsprechend dem Blockschaltbild gemäß Fig. 3 ist folgendermaßen aufgebaut:

Die Hydraulikanlage an der Verteilmaschine ist über die Steckverbindungen 34 mit der Schlepperhydraulikanlage 21 verbunden. Zunächst weist die Hydraulikanlage das als 4/3 Wegeventil ausgebildete Wegeventil 35 auf, von welchem aus die Druckölleitung zu dem Hydraulikmotor 20, der die Dosierorgane der Verteilmaschine antreibt, führt. In der Druckölleitung 33 ist das Dreiwegestromregelventil 23 angeordnet. Das Dreiwegestromregelventil 23 wird über die Steuerleitung 28 von der einen Mikroprozessor aufweisenden elektronischen Einrichtung 25' angesteuert. Diese elektronische Einrichtung ist als Überwachungseinrichtung 25' ausgebildet. Dieser Überwachungseinrichtung 25' werden über der Fahrgeschwindigkeitssensorik 26 Informationssignale über die aktuelle Fahrgeschwindigkeit 26 der Verteilmaschine zugeführt. Die Fahrgeschwindigkeitssensorik kann an einem Laufrad der Verteilmaschine, an einem separaten Geschwindigkeitsaufnehmer, an einem Laufrad des die Verteilmaschine ziehenden Schleppers oder aber als berührungsloser Fahrgeschwindigkeitssensor, wie beispielsweise eines Fahrgeschwindigkeitsrades etc. ausgebildet sein. Des weiteren ist der elektronischen Überwachungseinrichtung 25' die Ausbringüberwachungssensorik 27 zugeordnet, welche die Drehzahl der Dosierorgane oder die tatsächlich ausgebrachte Menge von Material ermittelt, zugeordnet. Die Ausbringsensorik 27 übermittelt entsprechende Signale an die elektronische Überwachungseinrichtung 25'. Für die Betätigung des 4/3 Wegeventils 35 ist noch der elektronische oder elektrische Schaltkreis 36 vorgesehen. Dieser Schaltkreis 36 weist den von Hand zu betätigenden Schalter 37 auf, der beispielsweise als Tastschalter ausgebildet sein kann. Der Schalter 37 ist in mehrere Schaltpositionen zu bringen. Des weiteren ist in dem elektrischen Schaltkreis 36 für die Betätigung des Wegeventils 35 der von dem Schalter 36 zu schaltende Unterbrechungsschalter 38 in der zu dem Wegeventil 35 führenden Steuerleitung 39 angeordnet. Außerdem sind an dem Wegeventil 35 über die Hydraulikleitung 40 die beiden Hydraulikzylinder 41 angeordnet, über welche verschiedene Elemente der Verteilmaschine zu betätigen sind, so daß beispielsweise das Ausheben oder Absenken von Säscharen oder das Ein- und Ausklappen von Auslegergestängen erfolgen kann.

Im folgenden soll zunächst der Aufbau und die Funktion der elektronischen Überwachungseinrichtung 25' erläutert werden.

Mittels der elektronischen Überwachungseinrichtung 25' wird über die Steuerleitung 28 das Regelventil 23 geregelt. Durch die jeweilige Stellung des Regelventils 23 wird die Drehzahl des Hydraulikmotors 20 eingestellt. Das Wegeventil 35 wird ebenfalls von der elektronischen Überwachungseinrichtung 25' über die Steuerleitung 39 geschaltet. Während des Ausbringvorganges 37 ist über den von Hand zu betätigenden Schalter 37 der Schalter 38 derart geschaltet, daß die Leitung 39 über den Schalter 38 mit der elektronischen Überwachungseinrichtung 25 verbunden ist. In der elektronischen Überwachungseinrichtung ist eine derartige Schaltung vorgesehen, die in festgelegten kontinuierlichen Zeitintervallen die aktuelle Fahrgeschwindigkeit aufgrund der von der Sensorik 26 übermittelten Impulse ermittelt und mit der in dem vorherigen Zeitintervall ermittelten Fahrgeschwindigkeit aufgrund der von der Sensorik 26 übermittelten Werte vergleicht. Durch den Vergleich der Fahrgeschwindigkeiten in bestimmten Zeitintervallen miteinander wird ein Fahrgeschwindigkeitsveränderungswert ermittelt. Bei einer konstanten Fahrgeschwindigkeit der Verteilmaschine ist der Fahrgeschwindigkeitsveränderungswert gleich "eins". Wird die Fahrgeschwindigkeit der Verteilmaschine beim Ausbringvorgang verlangsamt, d.h. daß eine Verzögerung der Fahrgeschwindigkeit vorliegt, so ergibt sich bei dem Vergleich der Fahrgeschwindigkeiten miteinander ein Fahrgeschwindigkeitsveränderungswert, der einen Wert von größer als eins hat. Wird die Fahrgeschwindigkeit der Verteilmaschine vergrößert, so ergibt sich durch einen Vergleich der Fahrgeschwindigkeit miteinander ein Fahrgeschwindigkeitsveränderungswert der kleiner als "eins" ist.

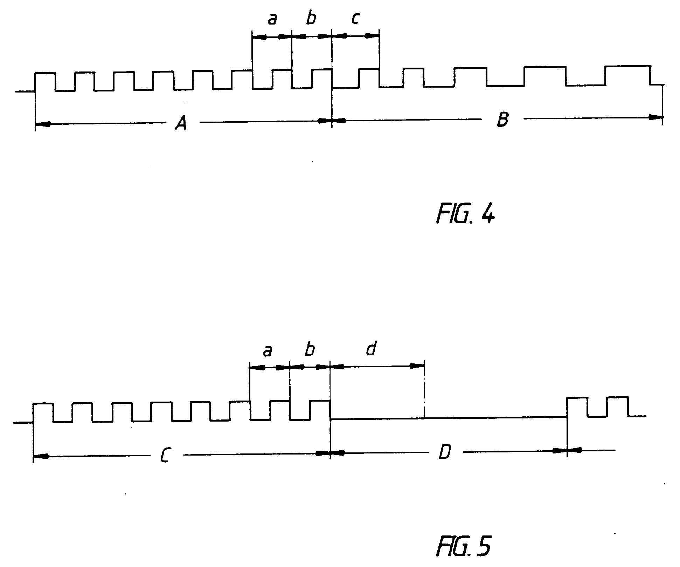

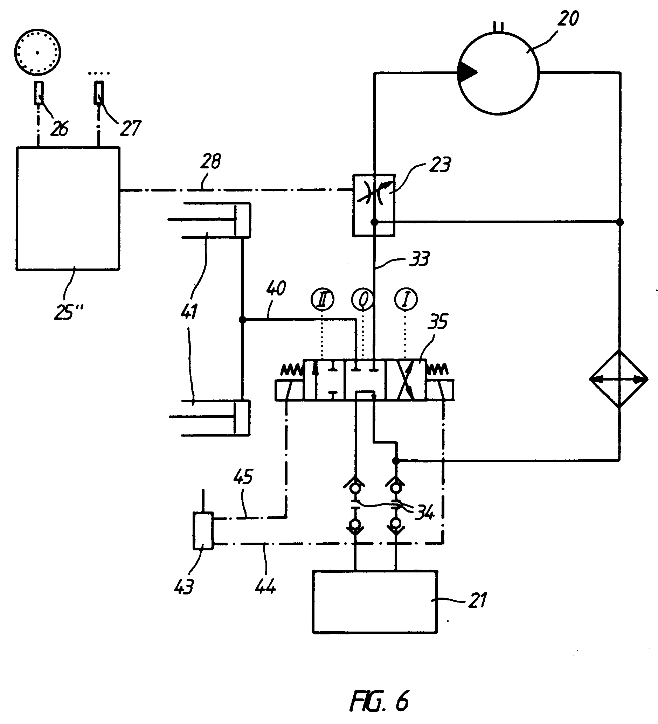

Dieses soll anhand der Diagramme gemäß den Fig. 4 und 5 näher erläutert werden.

Wie die Fig. 4 zeigt, bewegt sich die Verteilmaschine über den Zeitabstand A mit einer kontinuierlichen Fahrgeschwindigkeit über den Acker, denn die Zeiten während der Zeitabstände a und b von Impuls zu Impuls, die von der Fahrgeschwindigkeitssensorik 26 an die Überwachungseinrichtung übermittelt werden, sind jeweils gleich groß. Fahrgeschwindigkeitsänderungwert ist "eins", also konstante und gleichmäßige Fahrgeschwindigkeiten der Verteilmaschine.

Während des Fahrabschnittes B wird der Zeitabschnitt von dem Auftreten des Impulses bis zu dem Auftreten eines neuen Impulses größer, d.h. die Fahrgeschwindigkeit der Maschine wird verzögert. Jetzt wird also ständig das Verhältnis von b zu a oder c zu b usw. gebildet. Dieser ermittelte Fahrgeschwindigkeitsänderungswert wird mit einem vorher festgelegten Grenzwert verglichen. Es wird also von dem elektronischen Überwachungsgerät ständig der Quotient der aufeinander folgenden Zeitabschnitte die zwischen dem Auftreten von Impuls zu Impuls liegen, berechnet. Ist der Quotient kleiner als der festgelegte Grenzwert, dann ist aufgrund der in der elektronischen Überwachungseinrichtung 25' einprogrammierten oder enthaltenen Schaltung die Schaltung so ausgelegt, daß das elektronische Überwachungsgerät 25 über die Steuerleitung 28 das Regelventil 23 und somit die Drehzahl des Hydraulikmotors und die Ausbringmenge in Abhängigkeit von der Fahrgeschwindigkeit führt. Der Hydraulikmotor 20 bzw. das Regelventil 23 ist also in einem Regelkreis angeordnet, dessen Führungsgröße die Fahrgeschwindigkeit ist. Wird jedoch der Grenzwert von dem durch den Vergleich der aufeinanderfolgenden Fahrgeschwindigkeitsänderungswerte bzw. Zeitintervalle miteinander gebildeten Wert überschritten, dann wird diese so von der elektronischen Überwachungseinrichtung 25' in der Weise interpretiert, daß jetzt eine Unterbrechung des Ausbringvorganges beispielsweise aufgrund eines Stoppes während einer Überfahrt oder der Ausbringvorgang am Feldende zum Wenden unterbrochen wird, so daß dann über die Steuerleitung 39 das Wegeventil 35 in die Stellung "0" gebracht wird. Während des Ausbringvorganges, wenn also der Quotient, der durch Vergleich der Fahrgeschwindigkeitsänderungswerte bzw. der Zeitintervalle zwischen den einzelnen Impulsen kleiner als "eins" wird, so ist das Wegeventil 35 selbstverständlich von der elektronischen Steuereinrichtung 25' über die Steuerleitung 39 in die Schaltposition "I" geschaltet. Somit wird also bei Erreichen des Grenzwertes durch den Fahrgeschwindigkeitsänderungswert das Wegeventil 35 über die Überwachungseinrichtung 25 geschaltet, so daß schlagartig die Druckölzufuhr über die Durcköllleitung 33 zu dem Hydraulikmotor 20 unterbrochen wird. Des weiteren ist die Schaltung in der elektronischen Überwachungseinrichtung 25 derart ausgelegt, daß bei einem Abschalten der Druckölzufuhr zu dem Hydraulikmotor 20 gleichzeitig der Regelkreis für den Stellmotor des Regelventils 23 abgeschaltet wird. So bleibt also die letzte aktuelle Stellung des Regelventils 23 vor dem Abschalten des Hydraulikmotors 20 beibehalten. Des weiteren wird diese letzte aktuelle Stellung des Regelventils 23 vor dem Abschalten des Hydraulikmotors 20 in der elektronischen Einrichtung 21 gespeichert. Der Regelkreis für die Regelung des Regelventils 23 wird in einfacher Weise dadurch unterbrochen, daß die Stromzufuhr zu dem Stellmotor des Regelventils 23 über die elektronische Einrichtung 25 abgeschaltet oder unterbrochen wird. Somit wird also die Regelung für den Stellmotor des Regelventils 23 bei einer Unterbrechung der Druckölzufuhr zu dem Hydraulikmotor 20 mittels des wegeventils 35 "außer Funktion" gesetzt.

Dieses bedeutet also, daß das Regelventil 23 in der letzten Einstellung verbleibt. Der große Vorteil liegt darin, daß bei erneutem Start des Ausbringvorganges über die elektronische Einrichtung 25' durch die Schaltung des Wegeventils 35 aus der Stellung "0" in die Stellung "I" die Druckölzufuhr zu dem Hydraulikmotor 20 wieder freigegeben wird und das Regelventil 23 dann bereits die richtige Einstellung hat. Denn hierdurch ergibt sich, daß der Antrieb für das oder die Dosierorgane bei Arbeitsbeginn oder Ende sofort gestoppt oder gestartet wird. Die Stellzeit zur Betätigung des Dreiwegetromwegeventils, 23 welche normalerweise aus der 0-Position bis in die erforderliche Regelstellung etwa zwei bis sechs Sekunden betragen würde, entfällt, so daß sich kein Nachlaufen des Hydraulikmotors und somit des Antriebes für das Dosierorgan ergibt und weiterhin ist keine lange Anlaufphase für die Dosierorgane bis in die Stellung der normalen Ausbringstellung vorhanden. Es ist also keine, wenn überhaupt nur eine sehr kurze Totzeit beim Ein- und Ausschalten der Dosierorgane vorhanden.

Bei dem Beispiel gemäß Fig. 5 bewegt sich die Verteilmaschine über den Zeitabschnitt C mit einer konstanten Fahrgeschwindigkeit über den Boden, denn die Zeitabschnitte a und b von Impuls zu Impuls sind gleich. Während des Zeitabschnittes D ist die Verteilmaschine im Stillstand. Bei dem gesamten Zeitabschnitt D wird kein Impuls von der Sensorik 26 an die elektronische Überwachungseinrichtung 25 übermittelt. Nach dem Zeitabschnitt d wird durch die Bildung des Quotienten von Istzeitabschnittes d zu b bei Erreichen des Grenzwertes bei der elektronischen Einrichtung 25' bereits nach dieser kurzen Zeit erkannt, daß ein Stillstand der Verteilmaschine vorliegen muß. Bei Erreichen dieses Grenzwertes, wird, wie vor erläutert, von der elektronischen Einrichtung 25' über die Steuerleitung 39 das Wegeventil 35 in die Stellung "0" geschaltet, so daß schlagartig der Ölmotor 20 stillgesetzt wird und gleichzeitig wird die Regelung für das Regelventil 23 abgeschaltet, so daß das Regelventil 23 die letzte aktuelle Stellung beibehält.

Über den Tastschalter 37 kann jetzt das Wegeventil 35 in die Stellung "II" geschaltet werden, so daß der Hydraulikzylinder 41 über die Leitung 50 mit Drucköl beaufschlagt wird, so daß über die Hydraulikzylinder 41 Teile der Verteilmaschine betätigt werden können. Wenn der Tastschalter 37 losgelassen wird, so wird das Wegeventil 35 automatisch wieder in die Schaltstellung "0", also in Ölrücklaufstellung geschaltet. Die Position "0", die also die Ausposition des Wegeventils ist, und die Einposition ("I") des Wegeventils 35 für den die Dosierorgane antreibenden Ölmotor 20, wobei der Drucköstrom über das Regelventil 23 zum Ölmotor 20 fließt, wird von der Überwachungseinrichtung 25' über die Steuerleitung 39 geschaltet.

In einigen Fällen kann es vorteilhaft sein, daß der Schalter 37 noch in eine dritte Stellung bringbar ist, in der über die Leitung 42 der Schalter 38 in eine Position geschaltet wird, in der die Leitung 39 von der elektronischen Überwachungseinrichtung 25' abgekoppelt ist. Auch kann der Schalter 37 und die Schaltung in der elektronischen Einrichtung 25' so ausgebildet sein, daß über die elektronische Einrichtung 25', wenn die Verteilmaschine zum Stillstand gekommen ist und nachdem über das Wegeventil 35 die Druckölzufuhr zu dem Hydraulikmotor 20 abgeschaltet ist, das Wegeventil kurzzeitig automatisch in die Schaltposition "II" geschaltet wird, so daß von der elektronischen Einrichtung 25' aus automatisch auch die Hydraulikzylinder 41 zu betätigt werden.

Die Hydraulikanlage gemäß Fig. 6 für eine Verteilmaschine ist in folgender Weise ausgelegt:
Über die Kupplungen 34 ist die Hydraulikanlage der Verteilmaschine an die Schlepperhydraulikanlage 21 angeschlossen. Die Hydraulikanlage der Verteilmaschine weist das 4/3 Wegeventil 35 auf. An das Wegeventil 35 ist die Druckleitung 33, die zu dem Hydraulikmotor 20 führt, welche die Dosierorgane der Verteilmaschine antreibt, angeschlossen. In der Druckleitung 33, die zu dem Hydraulikmotor 23 führt, ist das Dreiwegestromregelventil 23 angeordnet. Des weiteren ist an dem Wegeventil 35 die zu den Hydraulikzylindern 41 führende Hydraulikleitung 40 angeschlossen. Die Hydraulikzylinder 41 betätigen Maschinenelemente der Verteilmaschine.

Das Regelventil 23 wird über die Steuerleitung 28 von der elektronischen Überwachungseinrichtung 25" gesteuert. Diese elektronische Überwachungseinrichtung 25" weist die Fahrgeschwindigkeitssensorik 26 auf, über welche die elektronische Überwachungseinrichtung 25" Informationen über die momentane aktuelle Fahrgeschwindigkeit erhält. Des weiteren ist an der elektronischen Überwachungseinrichtung 25" die Sensorik 27 angeordnet, über welche die Drehzahl des Hydraulikmotors 20 oder die tatsächliche Ausbringmenge der Dosierorgane aufgenommen wird. Das Regelventil 23 ist in einem Regelkreis angeordnet, dessen Führungsgröße die aktuelle Fahrgeschwindigkeit ist. Entsprechend der aktuellen Fahrgeschwindigkeit, die über die Sensorik 26 aufgenommen wird, regelt die elektronische Überwachungseinrichtung 25" über die Steuerleitung 28 das Regelventil 23 und somit die Drehzahl des Hydraulikmotors 20 und die Ausbringmenge der Verteilmaschine.

Das 4/3 Wegeventil 35 wird über den von Hand zu betätigenden Schalter 43 geschaltet. Der Schalter 43 ist über die Steuerleitung 44 und 45 mit dem Wegeventil 35 verbunden. Der Schalter 43 ist derart ausgelegt, daß das Wegeventil 35 über die Steuerleitungen 44 und 45 derart zu schalten ist, daß beim Abschalten des Hydraulikmotors 20 über das Wegeventil 35 der Drucklölstrom dem Hydraulikzylinder 41 zugeleitet wird. Hierzu ist der Schalter 43 so ausgebildet, daß bei Loslassen des Tastschalters 43 das Wegeventil in Ölrücklaufstellung, also in Schaltposition 0 geschaltet wird. Die Einposition (Schaltstellung I) des Wegeventils 35 und die Ausposition (Schaltstellung 0) des Wegeventils 35 für den die Dosierorgane antreibenden Ölmotor 20, wobei der Drucklölstrom über das Dreiwegestromregelventil 35 zum Ölmotor 20 fließt, wird ebenfalls über den Tastschalter 43 in eine feste Position geschaltet. Das Ein- und Ausschalten des Ölmotors 20 erfolgt also ausschließlich nur über den von Hand zu betätigenden Tastschalter 43.

**Patentansprüche**

1. Hydraulikanlage für eine landwirtschaftliche Verteilmaschine, insbesondere Einzelkornsämaschine, Getreidesämaschine, Düngerstreuer und dgl., die einen regelbaren Antrieb für die das auszubringende Material, wie Saatkörner und Dünger dosierenden Dosierorgane aufweist, wobei der regelbare Antrieb zumindest einen Hydraulikmotor aufweist, dessen Drehzahl von einem Dreiwegestromregelventil regelbar ist, wobei in der Hydraulikleitung zu dem Hydraulikmotor ein schaltbares Wegeventil zum Ein- und Ausschalten des die Dosierorgane antreibenden Hydraulikmotors angeordnet ist,
   **gekennzeichnet** durch
   - eine Überwachungseinrichtung (25, 25', 25") mit der das Wegeventil (32, 35) schaltbar ist,
   - eine an die Überwachungseinrichtung angeschlossene Sensorik (26) zur Erfassung der aktuellen Fahrgeschwindigkeit und
   - eine Schaltung in der Überwachungseinrichtung, die in festgelegten kontinuierlichen Zeitintervallen die aktuelle Fahrgeschwindigkeit ermittelt und mit der in dem vorherigen Zeitintervall ermittelten Fahrgeschwindigkeit vergleicht und den durch Vergleich der Fahrgeschwindigkeiten ermittelten Fahrgeschwindigkeitsveränderungswert (Verzögerung oder Beschleunigung) mit einem festgelegten Grenzwert vergleicht, so daß bei Erreichen des Grenzwertes durch den Fahrgeschwindigkeitsänderungswert das Wegeventil (32, 35) geschaltet wird.

2. Hydraulikanlage, nach Anspruch 1, dadurch gekennzeichnet, daß ein Wegaufnehmer (26) zur Ermittlung der Fahrgeschwindigkeit vorgesehen ist, der mehrere Impulse pro Umdrehung erzeugt, daß die Zeit zwischen den einzelnen Impulsen von der Überwachungseinrichtung erfaßt und jeweils das Verhältnis zwischen den aufeinanderfolgenden Zeiten von Impuls zu Impuls gebildet wird, und daß ein Grenzverhältnis festgelegt ist.

3. Hydraulikanlage, nach Anspruch 1 und/oder 2 , dadurch gekennzeichnet, daß bei Unterschreiten des Grenzwertes durch das Zeitverhältnis von Impuls zu Impuls und/oder des Fahrgeschwindigkeitsänderungswertes das Dreiwegestromregelventil (23) entsprechend den Änderungen nachgestellt bzw. nachgeregelt wird.

4. Hydraulikanlage, nach Anspruch 1, dadurch gekennzeichnet, daß das Wegeventil als 3/2 Wegeventil (32) ausgebildet ist.

5. Hydraulikanlage, nach Anspruch 1, dadurch gekennzeichnet, daß an das Wegeventil (35) zusätzlich zumindest ein Hydraulikzylinder (41) angeschlossen ist, daß beim Abschalten des Hydraulikmotors (20) über das Wegeventil (35) der Drucklölstrom dem Hydraulikzylinder (41) zugeleitet wird.

6. Hydraulikanlage nach Anspruch 5, dadurch gekennzeichnet, daß das Wegeventil als 4/3 Wegeventil (35) ausgebildet ist.

7. Hydraulikanlage, nach Anspruch 5, dadurch gekennzeichnet, daß das Wegeventil (35) in die die Hydraulikzylinder (41) mit Drucköl beaufschlagende Stellung über einen von Hand zu betätigenden Tastschalter (37) bringbar ist und bei Loslassen des Tastschalters (37) in "Ölrücklaufstellung" geschaltet wird, daß die "Ein"- und "Aus"- Position des Wegeventils für den die Dosierorgane antreibenden "Ölmotor", wobei der Drucklölstrom über das Dreiwegestromregelventil zum Ölmotor fließt, von der Überwachungseinrichtung geschaltet werden.

8. Hydraulikanlage nach Anspruch 1, dadurch gekennzeichnet, daß an das Wegeventil (35) zusätzlich zumindest ein Hydraulikzylinder (41) angeschlossen ist, daß beim Abschalten des Hydraulikmotors (20) über das Wegeventil (35) der Drucklölstrom dem Hydraulikzylinder (41) zugeleitet wird, daß das Wegeventil (35) in die die Hydraulikzylinder (41) mit Drucköl beaufschlagende Stellung über einen von Hand zu betätigenden Tastschalter (37,43) bringbar ist und bei Loslassen des Tastschalters (37,43) in "Ölrücklaufstellung" geschaltet wird, daß die "Ein"- und "Aus"- Position des Wegeventils (35) für den die Dosierorgane antreibenden Hydraulikmotor (20), wobei der Drücköstrom über das Dreiwegestromregelventil (23) zum Hydraulikmotor (20) fließt, ebenfalls über den Tastschalter (37,43) in feste Position geschaltet wird.

9. Hydraulikanlage nach Anspruch 1, dadurch gekennzeichnet, daß beim Abschalten der Druckölzufuhr zu dem Regelventil (23) und/oder Hydraulikmotor (20) gleichzeitig der Regelkreis für den Stellmotor des Regelventils (23) und/oder des Regelventils (23) abgeschaltet und so die letzte aktuelle Stellung des Regelventils (23) vor dem Abschalten des Hydraulikmotors (20) gespeichert wird und/oder beibehalten bleibt.

10. Hydraulikanlage, nach Anspruch 9, dadurch gekennzeichnet, daß die Stromzufuhr zu dem Stellmotor des Regelventils (23) abgeschaltet bzw. unterbrochen wird.

11. Hydraulikanlage, nach Anspruch 9, dadurch gekennzeichnet, daß die Regelung für den Stellmotor des Regelventils (23) "außer Funktion" gesetzt wird.

**Claims**

1. Hydraulic apparatus for an agricultural distributor, more especially a seed drill for sowing single seeds, a grain dispensing seed drill, fertilizer broadcasters and the like, which apparatus includes a controllable drive for driving the metering members, which meter the material to be distributed, such as seeds and fertilizers, the controllable drive including at least one hydraulic motor, the speed of which is controllable by a three-way current regulating valve, a switchable directional valve for controlling the hydraulic motor, which drives the metering members, being disposed in the hydraulic line to the hydraulic motor, characterised by
   - a monitoring means (25, 25', 25"), whereby the directional valve (32, 35) is switchable,
   - a sensor (26), which is connected to the monitoring means, for detecting the actual travel speed, and
   - a circuit in the monitoring means, which determines the actual travel speed in fixed, continuous time intervals and compares it with the travel speed which has been determined in the previous time interval, and said circuit compares the travel speed variation value (retardation or acceleration), which is determined by comparing the travel speeds, with a fixed limit value, so that the directional valve (32, 35) is switched upon the travel speed variation value attaining the limit value.

2. Hydraulic apparatus according to claim 1, characterised in that a travel sensor (26) for determining the travel speed is provided, which sensor generates a plurality of pulses per revolution, in that the time between the individual pulses is detected by the monitoring means, and the ratio between the successive times from pulse to pulse is formed, and in that a limit ratio is established.

3. Hydraulic apparatus according to claim 1 and/or 2, characterised in that, if the limit value is not reached by the pulse to pulse time ratio and/or if the travel speed variation value is not reached, the three-way current regulating valve (23) is adjusted, i.e. subsequently regulated, in accordance with the variations.

4. Hydraulic apparatus according to claim 1, characterised in that the directional valve is a 3/2 directional valve (32).

5. Hydraulic apparatus according to claim 1, characterised in that at least one hydraulic cylinder (41) is additionally connected to the directional valve (35), and in that the flow of pressure oil is supplied to the hydraulic cylinder (41) via the directional valve (35) upon the hydraulic motor (20) being switched-off.

6. Hydraulic apparatus according to claim 5, characterised in that the directional valve is a 4/3 directional valve (35).

7. Hydraulic apparatus according to claim 5, characterised in that the directional valve (35) is capable of being brought into the position, wherein the hydraulic cylinders (41) are impinged with pressure oil, via a keying switch (37) which is to be manually operated, and said directional valve is switched into the "oil return position" upon the release of the keying switch (37), and in that the "on" and "off" positions of the directional valve are switched by the monitoring means for the "oil motor", which drives the metering members, the flow of pressure oil flowing to the oil motor via the three-way current regulating valve.

8. Hydraulic apparatus according to claim 1, characterised in that at least one hydraulic cylinder (41) is additionally connected to the directional valve (35), in that the flow of pressure oil is supplied to the hydraulic cylinder (41) upon the hydraulic motor (20) being switched-off via the directional valve (35), in that the directional valve (35) is capable of being brought into the position, wherein the hydraulic cylinders (41) are impinged with pressure oil, via a keying switch (37, 43) which is to be manually operated, and said directional valve is switched into the "oil return position" upon the release of the keying switch (37, 43), and in that the "on" and "off" positions of the directional valve (35) for the hydraulic motor (20), which drives the metering members, are also switched into a fixed position via the keying switch (37, 43), the flow of pressure oil flowing to the hydraulic motor (20) via the three-way current regulating valve (23).

9. Hydraulic apparatus according to claim 1, characterised in that, upon the supply of pressure oil to the regulating valve (23) and/or hydraulic motor (20) being switched-off, the control system for the setting motor of the regulating valve (23) and/or of the regulating valve (23) is simultaneously switched-off, and, in consequence, the final, actual position of the regulating valve (23) prior to the switching-off of the hydraulic motor (20) is stored and/or retained.

10. Hydraulic apparatus according to claim 9, characterised in that the supply of current to the setting motor of the regulating valve (23) is switched-off, i.e. interrupted.

11. Hydraulic apparatus according to claim 9, characterised in that the means for regulating the setting motor of the regulating valve (23) is set to its "inoperative" position.

**Revendications**

1. Dispositif hydraulique pour machine distributrice agricole notamment pour semoir de précision, semoir de céréales, distributeur d'engrais ou machine analogue, comportant un moyen d'entraînement réglable pour les organes de dosage qui assurent le dosage du produit à distribuer tel que des grains de semence ou de l'engrais, le moyen d'entraînement réglable comprenant au moins un moteur hydraulique dont la vitesse de rotation se règle à l'aide d'un distributeur à tiroir à trois voies, et le circuit hydraulique relié au moteur hydraulique comportant un distributeur à tiroir commutable pour la mise en marche et l'arrêt du moteur hydraulique entraînant les organes de dosage, dispositif caractérisé par :
   - une installation de surveillance (25, 25', 25") qui permet de commuter le distributeur à tiroir (32, 35),
   - un détecteur électronique (26) relié à l'installation de surveillance pour détecter la vitesse de déplacement réelle et
   - un circuit appartenant à l'installation de surveillance qui détermine la vitesse de déplacement réelle à des intervalles de temps fixés en continu, et compare cette vitesse de déplacement déterminée dans l'intervalle de temps précédent et partant de la comparaison des vitesses de déplacement elle détermine une valeur de variation de vitesse de déplacement (décélération ou accélération) qui est comparée à une valeur limite, fixe de manière que lorsque la valeur de variation de vitesse de déplacement atteint cette valeur limite, le distributeur à tiroir (32, 35) soit commandé.

2. Dispositif hydraulique selon la revendication 1, caractérisé par un détecteur de trajet (26) pour déterminer la vitesse de déplacement qui génère plusieurs impulsions par rotation et selon lequel on détecte le temps compris entre les impulsions à l'aide de l'installation de surveillance et on forme le rapport entre les temps successifs d'une impulsion à l'autre et on fixe un rapport limite.

3. Dispositif hydraulique selon la revendication 1 et/ou 2, caractérisé en ce qu'en cas de dépassement de la valeur limite par le rapport des intervalles de temps d'une impulsion à l'autre et/ou de la valeur de variation de vitesse, le distributeur de réglage (23) est réglé ou est asservi suivant ces variations.

4. Dispositif hydraulique selon la revendication 1, caractérisé en ce que le distributeur à tiroir est un distributeur à trois/deux voies (32).

5. Dispositif hydraulique selon la revendication 1, caractérisé par au moins un vérin hydraulique (41) relié en outre au distributeur à tiroir (35) et en ce qu'à la coupure du moteur hydraulique (20) la veine de liquide sous pression est transférée au vérin hydraulique (41) par l'intermédiaire du distributeur à tiroir (35).

6. Dispositif hydraulique selon la revendication 5, caractérisé en ce que le distributeur à tiroir est un distributeur à quatre/trois voies (35).

7. Dispositif hydraulique selon la revendication 5, caractérisé en ce que le distributeur à tiroir (35) peut être conduit manuellement par action sur un commutateur à touche (37) dans la position d'envoi de liquide sous pression au vérin hydraulique (41) et lors de sa libération, le commutateur à touche (35) passe en position de retour de liquide hydraulique et en ce que la position "marche" et "arrêt" du distributeur à tiroir pour le moteur hydraulique entraînant les organes de dosage, lorsque le flux de liquide sous pression alimente le moteur hydraulique à travers le distributeur à tiroir à trois voies, est commandée par l'installation de surveillance.

8. Dispositif hydraulique selon la revendication 1, caractérisé en ce qu'au moins un vérin hydraulique (41) est relié en plus au distributeur à tiroir (35) et à la coupure du moteur hydraulique (20) par le distributeur (35), le flux de liquide sous pression est conduit vers le vérin hydraulique (41), le distributeur (35) pouvant être mis dans la position correspondant à l'alimentation en liquide sous pression du vérin hydraulique (41) par un commutateur à touche (37, 43) actionné à la main et en ce qu'à la libération du commutateur à touche (37, 43) il passe en position de retour de liquide, et en ce que la position "marche" et "arrêt" du distributeur à tiroir (35) pour le moteur hydraulique (20) entraînant les organes de dosage, le flux de liquide sous pression alimentant alors le moteur hydraulique (20) à travers le distributeur à tiroir à trois voies (23), étant également commuté en position fixe par le commutateur à touche (37, 43).

9. Dispositif hydraulique selon la revendication 1, caractérisé en ce qu'à la coupure de l'alimentation en liquide sous pression vers le distributeur de réglage (23) et/ou le moteur hydraulique (20) en même temps le circuit de réglage du moteur de réglage du distributeur réglable (23) et/ou du distributeur de réglage (23) est coupé et en ce que la dernière position réelle du distributeur de réglage (23) est mise en mémoire et/ou est conservée avant la coupure du moteur hydraulique (20).

10. Dispositif hydraulique selon la revendication 9, caractérisé en ce que l'alimentation en courant du moteur de réglage du distributeur de réglage (23) est coupée ou est interrompue.

11. Dispositif hydraulique selon la revendication 9, caractérisé en ce que la régulation du moteur de réglage du distributeur de réglage (23) est mise hors-service.

FIG.1

EP 0 294 712 B1

FIG. 2

14

FIG. 3

FIG. 4

FIG. 5

FIG. 6